# EUROPÄISCHE PATENTSCHRIFT

(11) **EP 0 383 123 B1**
(45) Veröffentlichungstag und Bekanntmachung des Hinweises auf die Patenterteilung: **30.03.1994**
(21) Anmeldenummer: 90102165.9
(22) Anmeldetag: 03.02.1990
(51) Int. Cl.: B60N 2/26

(54) **Sitz für Fahrzeug**
Seat for vehicle
Siège pour véhicule

(30) Priorität: 17.02.1989 DE 3904877; 29.03.1989 DE 3910133
(43) Veröffentlichungstag der Anmeldung: 22.08.1990
(73) Patentinhaber: Volkswagen Aktiengesellschaft, 38436 Wolfsburg (DE)
(72) Erfinder: Poznanski-Eisenschmidt, Michael, Dipl.-Ing., D-3300 Braunschweig (DE); Sinnhuber, Ruprecht, D-3170 Gifhorn (DE)

(56) Entgegenhaltungen:
- EP-A- 0 003 354
- DE-A- 3 716 619
- FR-A- 2 212 800
- FR-A- 2 393 703
- FR-B- 2 274 468
- US-A- 4 159 127
- PATENT ABSTRACTS OF JAPAN vol. 12, no. 409 (M-758)(3256) 28 Oktober 1988,& JP-A-63 149241 (DAIHATSU MOTOR) 22 Juni 1988
- PATENT ABSTRACTS OF JAPAN vol. 11, no. 356 (M-644)(2803) 20 November 1987,& JP-A-62 134340 (NIPPON SOKEN) 17 Juni 1987

## Beschreibung

Die Erfindung betrifft einen Sitz für ein Fahrzeug gemäß dem Oberbegriff des Patentanspruchs 1.

Ein gattungsgemäßer Fahrzeugsitz ist bekannt geworden aus der JP-A-63 149 241. Das dort gezeigte Sitzkissen weist ein Sitzkis-senteil auf, das zur Bildung einer Rückhalteeinrichtung für das Kind um eine quer zum Sitz verlaufende Achse aus der Sitzkontur heraus verschwenkbar ist. Der mit dem Rückhalteelement verbundene Schwenkarm ist zwischen den Beinen des Kindes angeordnet und in einer Drehstellung arretierbar. Eine derartige Gestaltung ist für das Kind während des normalen Fahrbetriebes sehr unbequem und kann darüber hinaus bei Fahrzeugunfällen erhebliche Verletzungen im Unterleibsbereich des Kindes hervorrufen.

Auch aus der DE-C-2 803 574 und der DE-A-3 716 619 sind Fahrzeugsitze bekannt, die durch Bewegungen von Sitzkissenteilen in eine Kinderrückhalteeinrichtung umwandelbar sind. Sowohl die dort beschriebenen Fahrzeugsitze als auch der gattungsgemäße Fahrzeugsitz weisen den besonderen Vorteil auf, daß auf dem gleichen Fahrzeugsitz wahlweise erwachsene Fahrzeuginsassen oder Kinder Platz nehmen können.

Vor diesem Hintergrund besteht die Aufgabe der Erfindung darin, gattungsgemäße Fahrzeugsitze so weiterzuentwickeln, daß die Kinderrückhalteeinrichtung an die Größe des jeweils mitgeführten Kindes optimal angepaßt werden kann. Hinsichtlich der Bedienbarkeit ist der Fahrzeugsitz so auszuführen, daß Kinder unterschiedlicher Altersstufen ohne Schwierigkeiten in der Kinderrückhalteeinrichtung untergebracht und aus ihr auch wieder entnommen werden können.

Diese Aufgabe wird gelöst durch die kennzeichnenden Merkmale des Patentanspruchs 1. Die Unteransprüche enthalten zweckmäßige und besonders vorteilhafte Weiterbildungen der Erfindung.

Eine besonders positive Eigenschaft des erfindungsgemäßen Fahrzeugsitzes ist darin zu sehen, daß unabhängig von der Größe des jeweilig einsitzenden Kindes das Rückhalteelement mit Bezug auf die Beine, den Becken- und Thoraxbereich so einstellbar ist, daß einerseits für das Kind genügend Bewegungsfreiheit verbleibt und andererseits bei einem Fahrzeugunfall möglichst früh und anatomisch günstig eine Rückhaltewirkung eintritt. Darüber hinaus kann durch die Verdrehbarkeit des Rückhalteelementes die Größe der bei einem Fahrzeugunfall von dem Kind beaufschlagten Fläche an die Größe und das Gewicht des Kindes angepaßt werden.

In der Zeichnung sind schematisch besonders vorteilhafte Ausführungsbeispiele der Erfindung dargestellt. Es zeigt
- Figur 1:: die Draufsicht eines erfindungsgemäßen Fahrzeugsitzes, dessen die Kinderrückhalteeinrichtung bildende Sitzkissenteile so ausgebildet sind, daß bei einem Fahrzeugunfall die Rückhaltekräfte direkt von den Sitzkissenteilen in Karosserieteile des Fahrzeugs eingeleitet werden,
- Figur 2:: eine Seitenansicht des Fahrzeugsitzes gemäß Figur 1,
- Figur 3:: einen erfindungsgemäßen Fahrzeugsitz, dessen Rückhaltewirkung durch einen ohnehin im Fahrzeug vorhandenen Sicherheitsgurt unterstützt wird,
- Figur 4:: einen erfindungsgemäßen Fahrzeugsitz, in dem ein Airbag-System angeordnet ist,
- Figur 5:: eine weitere Variante für einen ebenfalls mit einem Airbag-System ausgerüsteten Fahrzeugsitz.

Gleiche Bauteile sind in allen Figuren gleich beziffert.

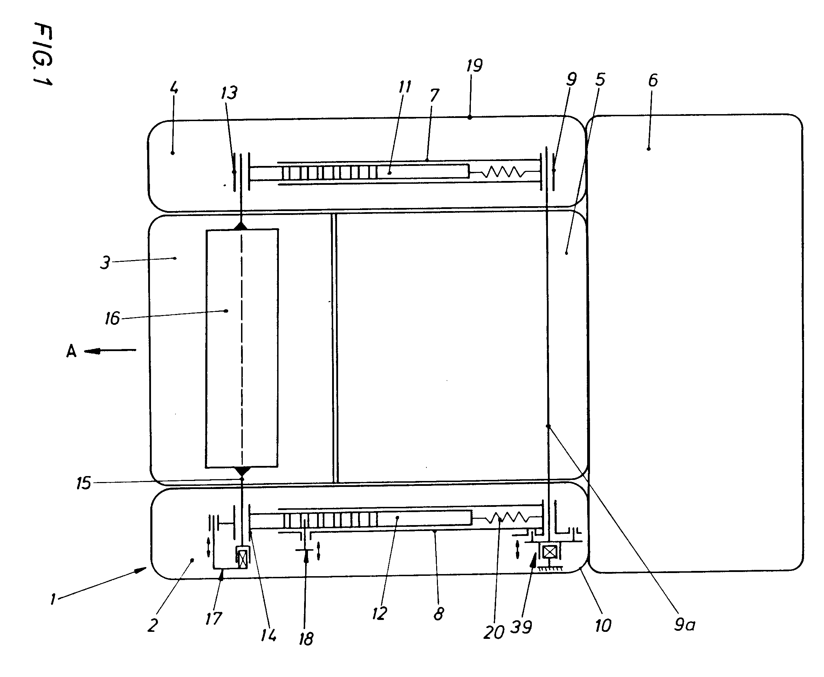

Man erkennt in Figur 1 einen erfindungsgemäßen Fahrzeugsitz 1, der im wesentlichen ein erstes Seitenteil 2, ein Rückhalteelement 3, ein zweites Seitenteil 4, eine Restsitzfläche 5 sowie eine Rückenlehne 6 aufweist. Innerhalb der Seitenteile 2, 4 sind Gelenkstangen 7 und 8 angeordnet, die mit Drehgelenken 9 und 10 über eine hier einteilig ausgeführte Schwenkachse 9a an einem in dieser Ansicht nicht sichtbaren Sitzbodenteil angelenkt ist. In den hier rohrförmig ausgebildeten Gelenkstangen 7, 8 sind Schubstangen 11 und 12 geführt, die über Anlenkpunkte 13 und 14 mit einem Träger 16, der innerhalb des Rückhalteelementes 3 angeordnet ist, gelenkig verbunden sind. Das Rückhalteelement 3 ist in den Anlenkpunkten 13, 14 um eine Achse 15 drehbar und durch eine erste Arretiervorrichtung 17 in vorgebbaren Drehstellungen arretierbar.

Mittels einer zweiten Arretiervorrichtung 18 ist das Rückhalteelement 3 zwischen den Seitenteilen 2 und 4 in verschiedenen Positionen arretierbar. Bei einem besonders zweckmäßigen - in der Zeichnung nicht dargestellten Ausführungsbeispiel - sind die erste und zweite Arretiervorrichtung zur Verbesserung des Bedienungskomforts zu einer einzigen Arretiervorrichtung zusammengefaßt. Zwischen den Schubstangen 11, 12 und den Gelenkstangen 7, 8 sind Federelemente 19, 20 angeordnet. Bei einer Verschiebung des Rückhaltelementes 3 in Pfeilrichtung A und anschließender Arretierung durch die zweite Arretiervorrichtung 18 können die Federelemente 19, 20 beispielsweise auf Zug vorgespannt werden, so daß nach Aufhebung der Arretierung eine selbsttätige Rückverstellung des Rückhalteelementes 3 in die hier gezeigte Ausgangsposition herbeigeführt wird. Es ist aber auch möglich, die Federelemente 19, 20 in der gezeigten Stellung mit einer Druckvorspannkraft zu beaufschlagen, so daß nach Aufhebung der Arretierung eine selbsttätige Bewegung des Rückhalteelementes 3 in Pfeilrichtung A erfolgt. Den Drehgelenken 9, 10 und der Schwenkachse 9a ist eine dritte Arretiervorrichtung 39 zugeordnet, durch die die Seitenteile 2, 4 in ihrer jeweils eingeschwenkten Stellung arretierbar sind.

Zur näheren Verdeutlichung ist die Seitenansicht des erfindungsgemäßen Fahrzeugsitzes teilweise halbschnittartig dargestellt. Das insgesamt mit 21 bezeichnete Sitzkissen weist ein Sitzbodenteil 22 auf, das bei der mit durchgezogenen Linien dargestellten Ausgangsstellung des Fahrzeugsitzes im wesentlichen die Seitenteile 2, 4, das Rückhalteelement 3 sowie die Restsitzfläche 5 aufnimmt. Am Sitzbodenteil 22 ist ein Sicherungszapfen 23 angeordnet, der in eine Öffnung 24 das Trägers 16 hineinragt. Dieser weist hier im Querschnitt ein kastenartiges Profil auf und wird von einer Polsterschicht 25 umgeben. Die Polsterschicht 25 ist so gestaltet, daß das Rückhalteelement 3 im wesentlichen eine kleinere Auflagefläche 26 und eine große Auflagefläche 27 sowie einen mit einer Mulde 28 versehenen Spieltisch 29 erhält, der hier eine steife Oberflächenschicht aufweist. Das gesamte Sitzkissen 21 ist um einen Zapfen 30, der ortsfest mit einem Karosserieabschnitt 31 verbunden ist, schwenkbar und kann in eine Position verschwenkt werden, die eine Bewegung der Rückenlehne 6 in die zuvor von dem Sitzkissen 21 eingenommene Position ermöglicht, oder gegebenenfalls sogar vollständig von dem Karosserieabschnitt 31 gelöst werden. Zu diesem Zweck ist an dem Sitzbodenteil 22 hier eine halboffene Lasche 32 befestigt, an der ein Haltefederteil 32a angeordnet ist, und die bei der in der Zeichnung dargestellten Ausgangsstellung das Sitzkissen 21 eindeutig fixiert und erst nach Verschwenken des Sitzkissens 21 um einen vorgebbaren Winkel eine Entfernung desselben gegen den Widerstand des Haltefederteils 32a erlaubt. Durch das Haltefederteil 32a wird das Sitzkissen 21 auch in einer lediglich hochgeklappten Stellung gesichert. Die Gelenkstange 8 ist mit einem Verankerungsbügel 33 verbunden, der seinerseits an einem mit dem Karosserieteil 31 verbundenen Verankerungszapfen 34 anlenkbar ist. Mit 35 ist eine für das Kind unzugänglich angeordnete Betätigungseinrichtung bezeichnet, die über einen Knauf 36 und einen Seilzug 37 gegen die Wirkung eines Druckfederelementes 38 das Lösen des Verankerungsbügels 33 von dem Verankerungszapfen 34 ermöglicht. Nur der Vollständigkeit halber sei erwähnt, daß auch die Gelenkstange 9 mit einem Verankerungsbügel versehen ist. Dieser ist ebenfalls durch die Betätigungseinrichtung 35 beaufschlagbar.

Mit einer dicken Linie ist schließlich eine Sitzschale 40 angedeutet, die im wesentlichen der menschlichen Anatomie angepaßt und mit einem Gefälle zur Rückenlehne 6 angeordnet ist.

Für die Umwandlung des Sitzkissens 21 in eine Kinderrückhalteeinrichtung ist zunächst das Rückhalteelement 3 so hoch anzuheben, daß der Sicherungszapfen 23 nicht mehr in die Öffnung 24 hineinragt. Anschließend wird das Rückhalteelement 3 in eine Position geschoben, die in der Zeichnung gestrichelt dargestellt und mit I beziffert ist. In dieser Position ist das Rückhalteelement 3 durch die zweite Arretiervorrichtung 18 arretierbar und stellt somit keine Behinderung bei der Unterbringung des Kindes auf der Restsitzfläche 5 dar. Danach werden das Rückhalteelement 3 und die Seitenteile 2 und 4 um die aus den Drehgelenken 9, 10 gebildete Schwenkachse gedreht. Diese Position der Kinderrückhalteeinrichtung ist mit strichpunktierten Linien dargestellt und hier mit II bezeichnet. Durch Verschiebung in Pfeilrichtung B und Verdrehung um die Drehgelenke 9, 10 ist das Rückhalteelement 3 je nach Kindesgröße in der Höhe so einstellbar, daß einerseits genügend Beinfreiheit vorhanden ist, und daß andererseits bei einem Fahrzeugunfall das Herausrutschen des Kindes aus der Kinderrückhalteeinrichtung vermieden wird. Durch die Schwenkbewegung um die Drehgelenke 9, 10 und die anschließende Arretierung der Seitenteile 2, 4 durch die dritte Arretiervorrichtung 39 kann auch der Abstand zum Brust- und Abdominalbereich des Kindes optimal eingestellt werden. Darüber hinaus kann durch Verdrehung des Rückhalteelementes 3 in Drehrichtung C die Größe der bei einem Fahrzeugunfall von dem Kind beaufschlagten Auflagefläche dem Gewicht und der Größe des Kindes angepaßt werden. Für ein jüngeres Kind sollte die kleinere Auflagefläche 26 und für ein älteres Kind die größere Auflagefläche 27 dem Brustbereich gegenüberstehen.

Die Entnahme des Kindes bereitet ebenfalls keine Schwierigkeiten, denn es ist lediglich das Rückhalteelement 3 mit den Seitenteilen 2 und 4 in die Position I zurückzuschwenken. Nach der Entnahme des Kindes erfolgt eine Verschiebung des Rückhalteelementes 3 entgegen der Pfeilrichtung A, so daß der in der Zeichnung dargestellte Ausgangszustand wieder hergestellt ist.

Ein besonderer Vorteil des erfindungsgemäßen Ausführungsbeispiels besteht darin, daß nach einem Fahrzeugunfall die Bergung des Kindes samt Sitzkissen 21 möglich ist. Für eine solche Bergung ist lediglich der Knauf 36 in Pfeilrichtung D zu bewegen. Dadurch wird über den Seilzug 37 der Verankerungsbügel 33 vom Verankerungszapfen 34 gelöst. Die Lasche 32 ist so ausgebildet, daß bei einer leichten Schwenkung des Fahrzeugsitzes 1 um den Zapfen 30 der Fahrzeugsitz 1 quer zur Fahrtrichtung des Fahrzeuges durch die Fahrzeugtür hindurch nach außen bewegt werden kann. Die Anordnung des Knaufes 36 unterhalb des Fahrzeugsitzes 1 an einer quer zur Fahrtrichtung verlaufenden Karosseriewand ist besonders zweckmäßig, weil damit selbst nach einem Seitenaufprall die Funktionsfähigkeit der Betätigungseinrichtung 35 nicht beeinträchtigt wird. Hervorzuheben ist, daß die gesamte Kinderrückhalteeinrichtung bei dem erfindungsgemäßen Ausführungsbeispiel so ausgelegt ist, daß auch bei Seitenaufprallunfällen das Kind umfassend gesichert ist. Zu diesem Zweck sind beispielsweise auch die Gelenkstangen 7, 8 und die Schubstangen 11, 12 energieverzehrend nachgiebig ausgebildet und ständig von einer Polsterung umgeben.

Eine weitere vorteilhafte Ausgestaltung der Erfindung weist für das Rückhalteelement 3 und die Seitenteile 2 und 4 Polsterungen auf, deren Nachgiebigkeit von der mit dem Träger 16 verbundenen Innenschicht zur Oberflächenschicht hin kontinuierlich oder schrittweise weicher werdend ausgeführt ist. Dies ermöglicht bei einem Fahrzeugunfall für das Kind im Hinblick auf die körperliche Belastung ein günstiges Verzögerungsverhalten. Eine derartige progressive Kennlinie für den Verformungswiderstand des Rückhalteelementes 3 über dessen Verformungsweg ist aber auch durch besondere konstruktive Gestaltungen am Träger 16 möglich. Beispielhaft ist die in der Position II mit einer doppelten Strichlinie angedeutete Ausführung eines Trägers 16. Dieser weist an seiner der Rückenlehne 6 zugewandten Seite eine Wölbung 16′ auf, die bei einem Fahrzeugunfall gespreizt wird. Dabei entsteht eine für das Kind günstige Vergrößerung der Auflagefläche. Diese Vergrößerung ermöglicht eine verbesserte Abstützung des Beckens und des Thoraxbereiches. Außerdem wächst mit zunehmender Spreizung der Verformungswiderstand des Trägers 16′.

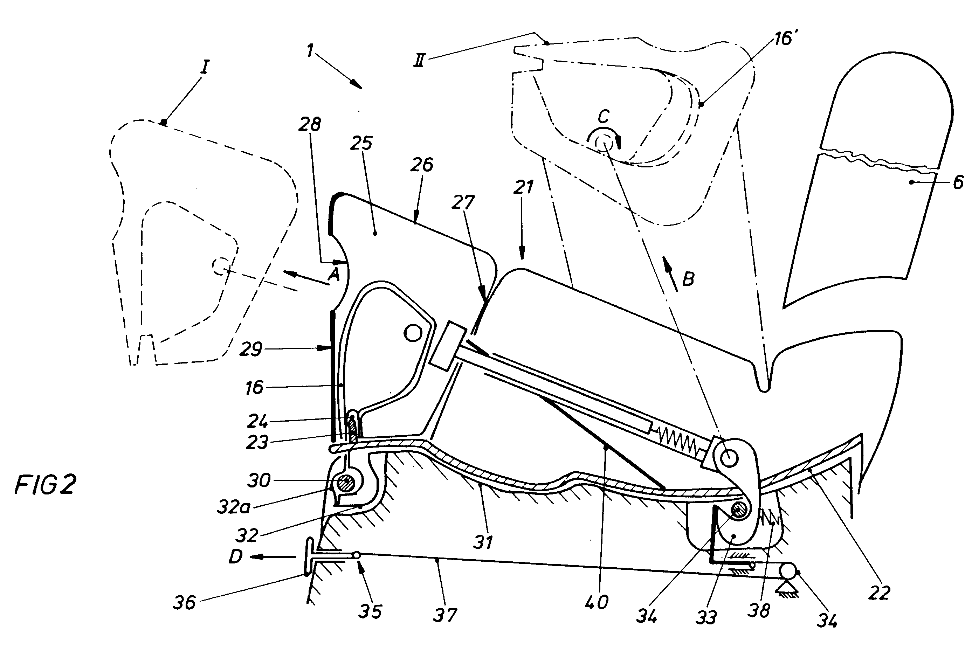

Bei dem in der Figur 2 dargestellten Ausführungsbeispiel sind sämtliche Drehgelenkverbindungen mit versteifenden Beschlägen versehen, damit die am Rückhalteelement 3 und den Seitenteilen 2, 4 wirkenden Kräfte über den Verankerungsbügel 33 in das Karosserieteil 31 eingeleitet werden können. Aus Gründen der Übersichtlichkeit sind diese Beschläge in der Zeichnung nicht näher dargestellt.

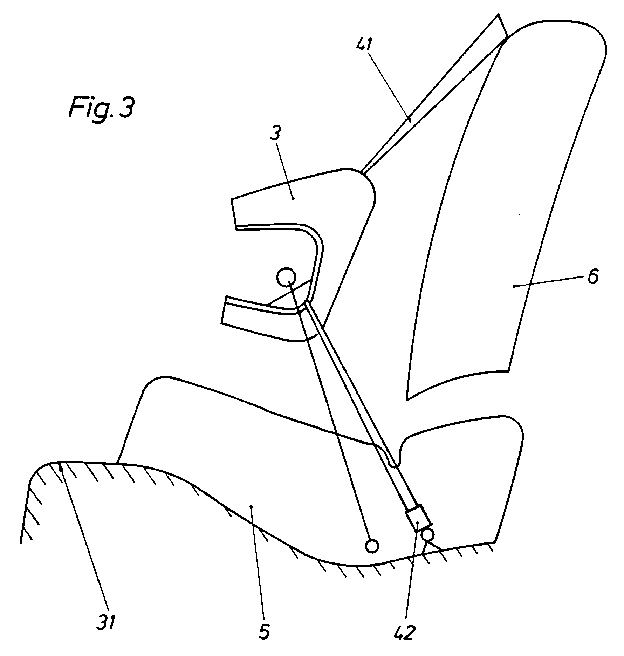

Das in Figur 3 dargestellte Ausführungsbeispiel gleicht hinsichtlich seines Aufbaus in etwa dem in Figur 2 beschriebenen Fahrzeugsitz 1. Allerdings sind hier die Drehgelenkverbindungen nicht mit versteifenden Beschlägen versehen, weil bei einem Fahrzeugunfall die Rückhaltekraft im wesentlichen von einem Sicherheitsgurt 41 aufgebracht wird, der ohnehin am Fahrzeugsitz 1 vorhanden ist. Dieser Sicherheitsgurt 41, der beispielsweise ein Schrägschultergurt oder ein Dreipunkt-Sicherheitsgurt ist, wird an das Rückhalteelement 3 angelegt und in einem Gurtschloß 42 befestigt. Das Rückhalteelement 3 weist hier einen offenen kastenförmigen Querschnitt auf. Hinsichtlich der Bedienungsfreundlichkeit ist das Anlegen des Sicherheitsgurtes 41 um die Kinderrückhalteeinrichtung genauso unproblematisch wie das Gurtanlegen bei einem erwachsenen Fahrzeuginsassen.

Bezugnehmend auf Figur 2 ist noch auf die besondere Bedeutung der Sitzschale 40 hinzuweisen. Diese ist mit einem Gefälle zur Rückenlehne 6 so angeordnet, daß die Außenkontur des Trägers 16 mit der Sitzschale 40 im wesentlichen fluchtet. Bei der in Figur 2 dargestellten Ausgangsstellung verhindert das Rückhalteelement 3, daß bei einem Fahrzeugunfall ein erwachsener Fahrzeuginsasse unter dem Sicherheitsgurt hindurchrutscht. Durch die fluchtende Anordnung ist der Träger 16 für den Fahrzeuginsassen überhaupt nicht spürbar, so daß keine Einbußen hinsichtlich des Sitzkomforts hinzunehmen sind. Ein besonders positives Merkmal des erfindungsgemäßen Sitzes ist auch der verbesserte Sitzkomfort für das Kind. Durch das Hochklappen des Rückhalteelementes 3 entsteht mit der Restsitzfläche 5 ein kürzerer Sitz, so daß das Kind die Beine knicken kann und damit bequem sitzt.

Verständlicherweise ist die Erfindung nicht auf die in der Zeichnung dargestellten Ausführungsbeispiele beschränkt. Alternativ zu der bereits beschriebenen Schiebebewegung des Rückhalteelementes 3 in Pfeilrichtung A ist beispielsweise auch ein Verschwenken des Rückhalteelementes 3 um einen Anlenkpunkt denkbar, der an einem der Seitenteile 2, 4 angeordnet ist. Durch ein solches Herausschwenken wird ebenfalls die Unterbringung des Kindes auf dem Fahrzeugsitz 1 erleichtert. Darüber hinaus ist die Anordnung mehrerer Gelenkstangen in den Seitenteilen 2 und 4 denkbar, um so zu einer insgesamt noch höheren Stabilität der Kinderrückhalteeinrichtung zu gelangen.

Besonders vorteilhaft ist auch die Anbringung von Kraftbegrenzungselementen beispielsweise an der dritten Arretiervorrichtung 39, dem Verankerungsbügel 33 oder an den Gelenkstangen 7 und 8. Durch die Kraftbegrenzungselemente wird sichergestellt, daß bei einem Fahrzeugunfall das Kind nicht gesundheitsgefährdend hoch belastet wird.

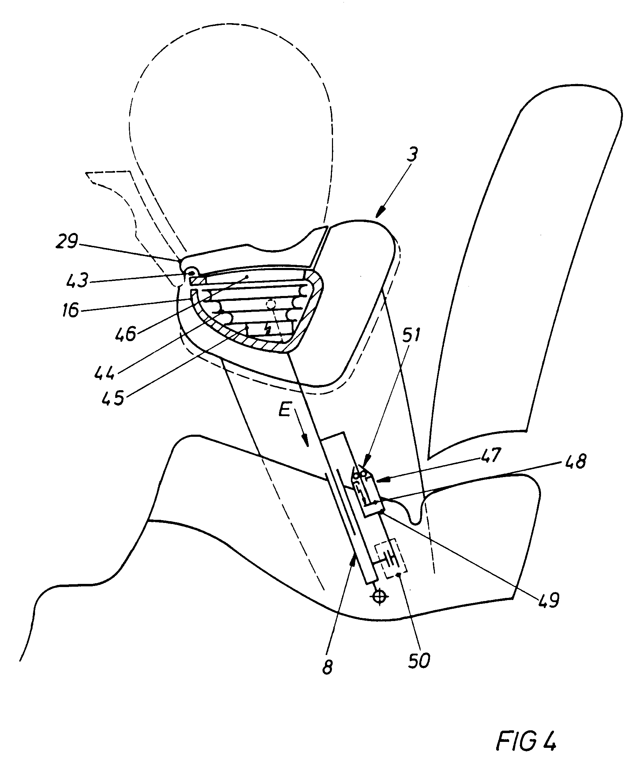

Von großer Bedeutung ist auch das in Figur 4 dargestellte Ausführungsbeispiel der Erfindung. Der Spieltisch 29 ist dort um ein Drehgelenk 43, das an dem Träger 16 angeordnet ist, aus der Kontur des Rückhalteelements 3 heraus in eine gestrichelt dargestellte Position schwenkbar. Innerhalb des Trägers 16 befindet sich ein zusammengefalteter sackartiger Behälter 44, der durch einen Generator 45 aufblasbar ist. Dieser Generator 45 ist durch hier nicht dargestellte Aufprallsensoren aktivierbar und ist beispielsweise nach der Art eines Hybridgenerators oder eines rein pyrotechnischen Gasgenerators ausgebildet. Durch eine Öffnung 46 hindurch kann der sackartige Behälter 44 während des Aufblasvorganges aus der Kontur des Trägers 16 heraustreten. Dabei wird der Spieltisch 29 in die gestrichelt dargestellte Position geschwenkt, so daß der sackartige Behälter 44 sich ungehindert vor dem auf dem Fahrzeugsitz mitgeführten Kind öffnen kann.

Ein in der Zeichnung nicht dargestelltes Ausführungsbeispiel weist in vorteilhafter Weise sackartige Behälter auch in den Seitenteilen 2, 4 auf, damit für das Kind bei Seitenaufprallunfällen eine gute Schutzwirkung erzielt wird.

Von großer Wichtigkeit ist auch eine Stelleinrichtung 47, durch die bei einem Fahrzeugunfall das Rückhalteelement 3 in Pfeilrichtung E bewegbar ist. Durch eine derartige Bewegung, die gegen den Becken- und Thoraxbereich sowie gegen die Beine des Kindes gerichtet ist, wird die an sich im normalen Fahrbetrieb gewünschte Bewegungsfreiheit des Kindes aufgehoben. Das Rückhalteelement 3 soll bei einem Fahrzeugunfall möglichst rasch auf das Kind zubewegt werden, damit dieses frühzeitig an der Verzögerung des Fahrzeuges teilnehmen kann. Die Stelleinrichtung 47 ist in ihrer Wirkung also vergleichbar mit den bei Sicherheitsgurten bekannten Gurtstrammern und kann beispielsweise nach Art eines Gasgenerators ausgebildet sein, durch den ein Kolben 48 aktivierbar ist, der beispielsweise in einem Kolbengehäuse 49 der Gelenkstange 8 geführt ist. Zweckmäßigerweise werden für die Aktivierung der Stelleinrichtung 47 die gleichen Aufprallsensoren herangezogen wie für die Aktivierung des Generators 45.

Besonders hervorzuheben ist eine Kraftbegrenzungseinrichtung 50 und eine dem Kolbengehäuse 49 zugeordnete Freilaufvorrichtung 51. Nach der Aktivierung der Stelleinrichtung 47 stellt die Kraftbegrenzungseinrichtung 50, die beispielsweise nach Art einer Rutschkupplung ausgebildet ist, zunächst sicher, daß das Kind bei einer Bewegung des Rückhalteelementes 3 in Pfeilrichtung E keine Quetschverletzungen erleidet. Wenn das Kind dann anschließend trägheitsbedingt das Rückhalteelement 3 belastet, sperrt die Freilaufvorrichtung 51, so daß die Rückhaltekräfte über die Stelleinrichtung 47, die Kraftbegrenzungseinrichtung 50 und die Gelenkstange 8 in hier nicht bezifferte Karosserieteile eingeleitet werden können. Auf diese Weise bewahrt die Kraftbegrenzungseinrichtung 50 das Kind also auch während der unfallbedingten Verzögerung des Fahrzeuges vor schweren Verletzungen.

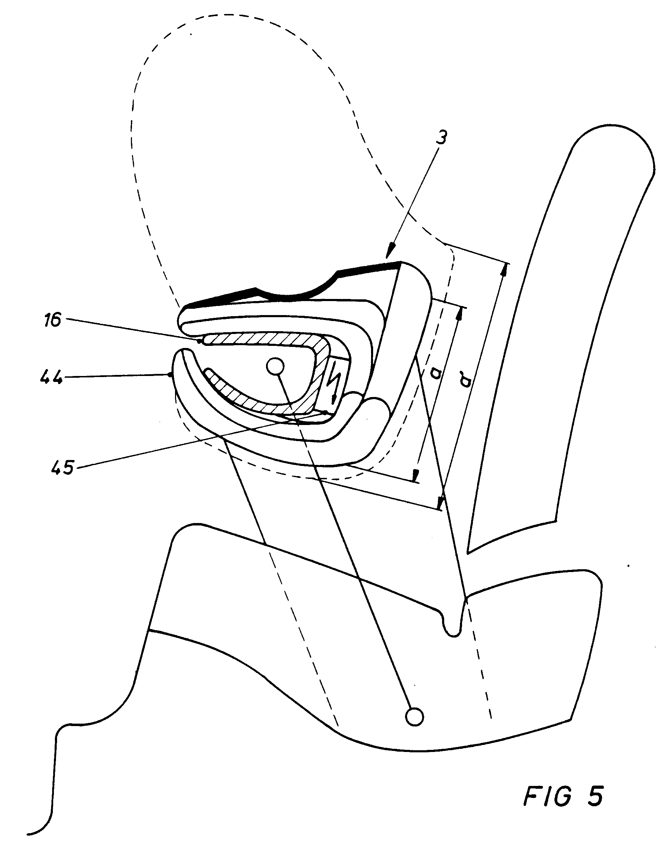

Bei dem in Figur 5 dargestellten Ausführungsbeispiel ist in besonders vorteilhafter Weise der sackartige Behälter 44 so genäht und zusammengelegt, daß er im zusammengefalteten Zustand die Außenkontur des Rückhalteelementes 3 bildet. Darüber hinaus ist die Nahtführung so ausgelegt, daß bei einem Fahrzeugunfall die Aufblasbewegung des sackartigen Behälters gegen den Becken- und Thoraxbereich sowie gegen die Beine gerichtet ist. Besonders hervorzuheben ist die damit gleichzeitig auch erfolgende Vergrößerung des Thoraxauflagebereiches um das Maß (a' - a). Das Maß a′ ist dabei so zu wählen, daß bei der Aufblasbewegung des sackartigen Behälters 44 die Arme des Kindes nicht in einem gesundheitlich unvertretbarem Maß hochgerissen werden.

Die in den Figuren 4 und 5 dargestellten Ausführungsbeispiele sind in besonderer Weise geeignet, Knickbewegungen des Kindes und daraus resultierende Verletzungen weitestgehend zu vermeiden. Verständlicherweise ist die Erfindung nicht nur auf die Merkmalskombinationen der in der Zeichnung dargestellten Ausführungsbeispiele beschränkt. Es ist durchaus möglich, Merkmale eines Ausführungsbeispieles mit Merkmalen der jeweils anderen Ausführungsbeispiele zu kombinieren.

Die Verwendung sackartiger Behälter, die bei einem Fahrzeugunfall aufblasbar sind, ist nicht nur bei den erfindungsgemäßen Ausführungsbeispielen, sondern auch bei gattungsbildenden Fahrzeugsitzen denkbar, wie sie beispielsweise aus der DE-C-2 803 574 und der DE-A-3 716 619 bekannt sind. Ebenso kann ein Fahrzeugsitz gemäß DE-A-3 715 312 mit einem derartigen sackartigen Behälter ausgerüstet werden.

## Patentansprüche

1. Sitz für ein Fahrzeug mit einem mehrteiligen Sitzkissen (21) und einer Rückenlehne (6) sowie mit einem aus der Sitzkontur herausbewegbaren und aus Sitzkissenteilen gebildeten Rückhalteeinrichtung für ein auf dem Sitz mitgeführtes Kind, die im wesentlichen zwei Seitenteile (2, 4) aufweist, welche durch mindestens ein Rückhalteelement verbunden sind, das um eine quer zum Sitz verlaufende Achse verdrehbar ist, dadurch gekennzeichnet, daß das Rückhalteelement (3) in mehreren Drehstellungen zwischen den Seitenteilen (2, 4) arretierbar ist und in einer Gleitführung durch eine Schiebebewegung aus einer die Seitenteile (2, 4) miteinander verbindenden Ausgangsstellung herausbewegbar ist.

2. Sitz nach Anspruch 1, dadurch gekennzeichnet, daß das Rückhalteelement (3) wenigstens einen energieverzehrend nachgiebigen Träger (16) aufweist.

3. Sitz nach Anspruch 2, dadurch gekennzeichnet, daß der Träger (16) im wesentlichen ein gestreckter Körper mit einem profilierten Querschnitt ist.

4. Sitz nach Anspruch 2, dadurch gekennzeichnet, daß der Träger (16) von einer Polsterschicht (25) umgeben ist.

5. Sitz nach Anspruch 4, dadurch gekennzeichnet, daß die Nachgiebigkeit der Polsterschicht (25) von der mit dem Träger (16) verbundenen Innenschicht zur Oberflächenschicht hin kontinuierlich oder schrittweise weicher werdend ausgeführt ist.

6. Sitz nach Anspruch 4, dadurch gekennzeichnet, daß das Rückhalteelement (3) wenigstens zwei unterschiedlich große, im wesentlichen ebene Auflageflächen (26, 27) bildet, die bei unterschiedlichen Drehstellungen der Rückenlehne zugekehrt sind.

7. Sitz nach Anspruch 4, dadurch gekennzeichnet, daß das Rückhalteelement (3) zur Ausbildung eines Spieltisches (29) wenigstens eine weitgehend steife Auflagefläche aufweist, die mit einer Mulde (28) versehen ist.

8. Sitz nach Anspruch 1, dadurch gekennzeichnet, daß das Rückhalteelement (3) zwischen den Seitenteilen (2, 4) quer zu der Achse in verschiedene Positionen bewegbar und in diesen arretierbar ist.

9. Sitz nach Anspruch 1, dadurch gekennzeichnet, daß durch die Schiebebewegung wenigstens ein Federelement (19, 20) beaufschlagbar ist.

10. Sitz nach Anspruch 1, dadurch gekennzeichnet, daß das Rückhalteelement (3) an einem der beiden Seitenteile (2, 4) um einen Anlenkpunkt schwenkbar und durch eine Schwenkbewegung um diesen Anlenkpunkt aus seiner Ausgangsstellung herausbewegbar ist.

11. Sitz nach Anspruch 1, dadurch gekennzeichnet, daß die Seitenteile (2, 4) an einem alle Sitzkissenteile aufnehmenden Sitzbodenteil (22) angelenkt und um wenigstens eine etwa parallel zu der Achse verlaufende Schwenkachse (Drehgelenke 9, 10) klappbar sind.

12. Sitz nach Anspruch 11, dadurch gekennzeichnet, daß innerhalb der Seitenteile (2, 4) angeordnete Gelenkstangen (7, 8) energieverzehrend nachgiebig ausgebildet sind.

13. Sitz nach Anspruch 11, dadurch gekennzeichnet, daß die Seitenteile (2, 4) jeweils mehrgliedrig angelenkt sind.

14. Sitz nach den Ansprüchen 12 oder 13, dadurch gekennzeichnet, daß die Gelenkstangen (7, 8) von einer Polsterschicht umgeben sind.

15. Sitz nach Anspruch 11, dadurch gekennzeichnet, daß das Sitzbodenteil (22) an einem Karosserieteil (31) des Fahrzeugs anlenkbar und um eine in etwa parallel zu der Achse verlaufende Schwenkachse (Zapfen 30) so schwenkbar ist, daß die Rückenlehne (6) in die Position des Sitzkissens (21) bewegbar ist.

16. Sitz nach Anspruch 1, dadurch gekennzeichnet, daß wenigstens ein zusätzliches Mittel zur Aufnahme der bei einem Fahrzeugunfall auf das Rückhalteelement (3) wirkenden Kraft vorgesehen ist.

17. Sitz nach Anspruch 16, dadurch gekennzeichnet, daß das Mittel ein ohnehin am Sitz vorhandener Sicherheitsgurt (41) ist, der an das Rückhalteelement (3) anlegbar ist.

18. Sitz nach Anspruch 16, dadurch gekennzeichnet, daß die Anlenkpunkte zwischen dem Rückhalteelement (3) und den Seitenteilen (2, 4) sowie die Anlenkpunkte zwischen den Seitenteilen (2, 4) und dem Sitzbodenteil (22) mit versteifenden Beschlägen versehen sind.

19. Sitz nach Anspruch 18, dadurch gekennzeichnet, daß die die Seitenteile (2, 4) mit dem Sitzbodenteil (22) verbindenden Beschläge (Verankerungsbügel 33) durch eine Betätigungseinrichtung (35) entriegelbar sind, die unterhalb des Sitzbodenteils (22) für das Kind unzugänglich angeordnet ist.

20. Sitz nach Anspruch 3, dadurch gekennzeichnet, daß zur Versteifung des Sitzkissens (21) dieses eine Sitzschale (40) aufweist, die im wesentlichen mit einem Gefälle zur Rückenlehne (3) angeordnet ist, und daß die Außenkontur des Trägers (16) im wesentlichen fluchtend zur Sitzschale (40) angeordnet ist, wenn das Rückhalteelement (3) innerhalb der Sitzkontur ist.

21. Sitz nach Anspruch 1, dadurch gekennzeichnet, daß die Rückhalteeinrichtung mindestens einen bei einem Unfall aufblasbaren, sackartigen Behälter (44) aufweist.

22. Sitz nach Anspruch 21, dadurch gekennzeichnet, daß der sackartige Behälter (44) im Rückhalteelement (3) angeordnet ist.

23. Sitz nach Anspruch 21, dadurch gekennzeichnet, daß sackartige Behälter in den Seitenteilen (2, 4) angeordnet sind.

24. Sitz nach Anspruch 22, dadurch gekennzeichnet, daß durch den sackartigen Behälter (44) in dessen Ausgangsstellung, in der dieser nicht aufgeblasen ist, die Außenkontur des Rückhalteelementes (3) gebildet ist.

25. Sitz nach Anspruch 24, dadurch gekennzeichnet, daß bei einem Unfall der sackartige Behälter (44) in Richtung des Kindes gegen den Becken- und Thoraxbereich sowie gegen die Beine aufblasbar ist.

26. Sitz nach Anspruch 22, dadurch gekennzeichnet, daß der sackartige Behälter (44) in der Ausgangsstellung im wesentlichen innerhalb des Trägers (16) angeordnet ist.

27. Sitz nach Anspruch 1, dadurch gekennzeichnet, daß das Rückhalteelement (3) bei einem Unfall durch eine Stelleinrichtung (47) selbsttätig in Richtung des Kindes gegen den Becken-und Thoraxbereich sowie gegen die Beine bewegbar ist.

28. Sitz nach Anspruch 1 oder 25, dadurch gekennzeichnet, daß den Gelenkstangen (7, 8) jeweils mindestens ein Kraftbegrenzungselement (50) zugeordnet ist.

## Claims

1. A seat for a motor vehicle having a multi-part seat cushion (21) and a back rest (6) as well as having a restraining device for an accompanying child on the seat, which device can be moved out of the seat contour, is formed from seat cushion parts and essentially comprises two lateral parts (2, 4), which lateral parts are connected by at least one restraining element, which restraining element is rotatable about an axis extending transverse to the seat, characterised in that the restraining element (3) can be locked in numerous rotational positions between the lateral parts (2, 4) and can be moved in a sliding guide by means of a sliding movement out from an initial position connecting the lateral parts (2, 4) to each other.

2. A seat according to claim 1, characterised in that the restraining element (3) comprises at least one energy-dissipating flexible support (16).

3. A seat according to claim 2, characterised in that the support (16) is essentially an elongated body having a profiled cross-section.

4. A seat according to claim 2, characterised in that the support (16) is surrounded by an upholstered layer (25).

5. A seat according to claim 4, characterised in that the flexibility of the upholstered layer (25) is formed by the inner layer connected to the support (16) and becoming continuously or stepwise softer towards the outer surface layer.

6. A seat according to claim 4, characterised in that the restraining element (3) forms at least two differently sized, essentially smooth supporting surfaces (26, 27), which support surfaces are facing when the back rest is in different rotational positions.

7. A seat according to claim 4, characterised in that the restraining element (3) comprises at least one extensively stiff support surface for the purpose of forming a play table (29), which support surface is provided with a trough (28).

8. A seat according to claim 1, characterised in that the restraining element (3) between the lateral parts (2, 4) can be moved into different positions transverse to the axis and can be locked in these positions.

9. A seat according to claim 1, characterised in that at least one spring element (19, 20) can be influenced by means of the sliding movement.

10. A seat according to claim 1, characterised in that at one of the two lateral parts (2, 4) the restraining element (3) can be pivoted about a linkage point and can be moved out of its initial position by means of a pivot movement about this linkage point.

11. A seat according to claim 1, characterised in that the lateral parts (2, 4) are articulated at a seat base part (22), receiving all seat cushion parts, and can be tilted about at least one pivot axis (hinge joint 9, 10) extending approximately parallel to the axis.

12. A seat according to claim 11, characterised in that hinge rods (7, 8), disposed inside the lateral parts (2, 4), are formed in an energy-dissipating, flexible manner.

13. A seat according to claim 11, characterised in that the lateral parts (2, 4) are each articulated in multiple sections.

14. A seat according to claims 12 or 13, characterised in that the hinge rods (7, 8) are surrounded by an upholstered layer.

15. A seat according to claim 11, characterised in that the seat base part (22) can be articulated at a chassis part (31) of the motor vehicle and can be pivoted about a pivot axis (spigot 30), extending approximately parallel to the axis, in such a way that the back rest (6) can be moved into the position of the seat cushion (21).

16. A seat according to claim 1, characterised in that at least one additional means of absorbing the force effective on the restraining element (3) in the event of a motor vehicle accident is provided.

17. A seat according to claim 16, characterised in that the means is a safety belt (41) already provided at the seat, which belt can be attached at the restraining element (3).

18. A seat according to claim 16, characterised in that the linkage points between the restraining element (3) and the lateral parts (2, 4) as well as the linkage points between the lateral parts (2, 4) and the seat base part (22) are provided with reinforced fittings.

19. A seat according to claim 18, characterised in that the fittings (anchorage brackets 33) connecting the lateral parts (2, 4) to the seat base part (22) can be unlocked by means of an operating device (35), which device is disposed underneath the sent base part (22) inaccessible to the child.

20. A seat according to claim 3, characterised in that for the purpose of reinforcing the seat cushion (21) this cushion comprises a seat shell (40), which shell is essentially disposed at an incline to the back rest (3), and in that the outer contour of the support (16) is disposed essentially flush to the seat shell (40) when the restraining element (3) is inside the seat contour.

21. A seat according to claim 1, characterised in that the restraining element comprises at least one bag-like container (44) which is inflatable in the event of an accident.

22. A seat according to claim 21, characterised in that the bag-like container (44) is disposed in the restraining element (3).

23. A seat according to claim 21, characterised in that the bag-like containers are disposed in the lateral parts (2, 4).

24. A seat according to claim 22, characterised in that the outer contour of the restraining element (3) is formed by means of the bag-like container (44) in its initial position, in which it is not inflated.

25. A seat according to claim 24, characterised in that in the event of an accident the bag-like container (44) is inflatable in the direction towards the child, towards the pelvic- and thorax region as well as towards the legs.

26. A seat according to claim 22, characterised in that the bag-like container (44) in the initial position is essentially disposed inside the support (16).

27. A seat according to claim 1, characterised in that, in the event of an accident, the restraining element (3) can be moved by means of an adjusting device (47) automatically in the direction towards the child, towards the pelvic- and thorax region as wall as towards the legs.

28. A seat according to claim 1 or 25, characterised in that at least one force limiting element (50) is allocated to each of the hinge rods (7, 8).

## Revendications

1. Siège pour un véhicule, comprenant un coussin de siège (21) en plusieurs parties et un dossier (6) ainsi qu'un dispositif de retenue qui peut sortir du contour du siège et est formé de parties des coussins du siège et qui est destiné à un enfant transporté sur le siège, ledit dispositif de retenue comprenant pour l'essentiel deux parties latérales (2, 4) qui sont reliées par au moins un élément de retenue qui peut tourner autour d'un axe transversal au siège, caractérisé en ce que l'élément de retenue (3) peut être immobilisé dans plusieurs positions de rotation entre les parties latérales (2, 4) et peut être sorti par un mouvement de poussée, dans un dispositif de guidage coulissant, hors d'une position initiale dans laquelle les parties latérales (2, 4) sont reliées l'une à l'autre.

2. Siège selon la revendication 1, caractérisé en ce que l'élément de retenue (3) comporte au moins un support (16) possédant une élasticité permettant d'absorber l'énergie.

3. Siège selon la revendication 2, caractérisé en ce que le support (16) est, pour l'essentiel, un corps allongé à section transversale profilée.

4. Siège selon la revendication 2, caractérisé en ce que le support (16) est entouré d'une couche de rembourrage (25).

5. Siège selon la revendication 4, caractérisé en ce que l'élasticité de la couche de rembourrage (25) est de plus en plus molle, selon une progression continue ou par paliers, à mesure que l'on s'éloigne de la couche intérieure reliée au support (16) et que l'on se rapproche de la couche superficielle.

6. Siège selon la revendication 4, caractérisé en ce que l'élément de retenue (3) forme au moins deux surfaces d'appui sensiblement planes (26, 27) de tailles différentes, qui sont tournées vers le dossier dans des positions de rotation différentes.

7. Siège selon la revendication 4, caractérisé en ce que, pour former une table de jeu (29), l'élément de retenue (3) comporte au moins une surface d'appui en grande partie rigide, qui est munie d'une partie en creux (28).

8. Siège selon la revendication 1, caractérisé en ce que l'élément de retenue (3) peut être déplacé et immobilisé dans diverses positions entre les parties latérales (2, 4) transversalement à l'axe.

9. Siège selon la revendication 1, caractérisé en ce qu'au moins un élément élastique (19, 20) peut être sollicité par le mouvement de poussée.

10. Siège selon la revendication 1, caractérisé en ce que l'élément de retenue (3) peut pivoter autour d'un point d'articulation au niveau de l'une des deux parties latérales (2, 4) et peut être sorti de sa position initiale par un mouvement pivotant autour de ce point d'articulation.

11. Siège selon la revendication 1, caractérisé en ce que les parties latérales (2, 4) sont articulées sur une partie de fond de siège (22), où sont logées toutes les parties des coussins de siège, et peuvent être repliées autour d'au moins un axe de pivotement (articulations tournantes 9, 10) sensiblement parallèle à l'axe.

12. Siège selon la revendication 11, caractérisé en ce que les tiges articulées (7, 8) disposées à l'intérieur des parties latérales (2, 4) sont conçues avec une élasticité permettant d'absorber l'énergie.

13. Siège selon la revendication 11, caractérisé en ce que chacune des parties latérales (2, 4) est articulée sur plusieurs éléments.

14. Siège selon les revendications 12 ou 13, caractérisé en ce que les tiges articulées (7, 8) sont entourées d'une couche de rembourrage.

15. Siège selon la revendication 11, caractérisé en ce que la partie de fond de siège (22) peut être articulée sur un élément de carrosserie (31) du véhicule et peut pivoter autour d'un axe de pivotement (tourillon 30) sensiblement parallèle à l'axe, de façon que le dossier (6) puisse être amené dans la position du coussin de siège (21).

16. Siège selon la revendication 1, caractérisé en ce qu'il est prévu au moins un moyen supplémentaire pour absorber la force exercée sur l'élément de retenue (3) lors d'un accident du véhicule.

17. Siège selon la revendication 16, caractérisé en ce que ce moyen est une ceinture de sécurité (41) qui est de toute façon prévue sur le siège et qui peut être appliquée contre l'élément de retenue (3).

18. Siège selon la revendication 16, caractérisé en ce que les points d'articulation entre l'élément de retenue (3) et les parties latérales (2, 4) ainsi que les points d'articulation entre les parties latérales (2, 4) et la partie de fond de siège (22) sont munis de ferrures raidisseuses.

19. Siège selon la revendication 18, caractérisé en ce que les ferrures (étrier d'ancrage 33) qui relient les parties latérales (2, 4) à la partie de fond de siège (22) peuvent être déverrouillées par un dispositif d'actionnement (35) qui est disposé en dessous de la partie de fond de siège (22) de façon à être inaccessible pour l'enfant.

20. Siège selon la revendication 3, caractérisé en ce que, pour raidir le coussin de siège (21), ce dernier comprend une cuvette de siège (40) qui est disposée sensiblement en pente par rapport au dossier (3), et en ce que le contour extérieur du support (16) est sensiblement aligné avec la cuvette de siège (40) lorsque l'élément de retenue (3) est à l'intérieur du contour du siège.

21. Siège selon la revendication 1, caractérisé en ce que le dispositif de retenue comporte au moins un réservoir (44) en forme de sac qui peut être gonflé en cas d'accident.

22. Siège selon la revendication 21, caractérisé en ce que le réservoir (44) en forme de sac est disposé dans l'élément de retenue (3).

23. Siège selon la revendication 21, caractérisé en ce que des réservoirs en forme de sacs sont disposés dans les parties latérales (2, 4).

24. Siège selon la revendication 22, caractérisé en ce que le contour extérieur de l'élément de retenue (3) est formé par le réservoir (44) en forme de sac lorsque ce dernier se trouve dans la position initiale, dans laquelle il n'est pas gonflé.

25. Siège selon la revendication 24, caractérisé en ce que, lors d'un accident, le réservoir (44) en forme de sac peut être gonflé en direction de l'enfant contre les zones du bassin et du thorax et contre les jambes.

26. Siège selon la revendication 22, caractérisé en ce que, en position initiale, le réservoir (44) en forme de sac est disposé sensiblement à l'intérieur du support (16).

27. Siège selon la revendication 1, caractérisé en ce que, lors d'un accident, l'élément de retenue (3) peut être déplacé automatiquement, par un dispositif de positionnement (47), en direction de l'enfant contre les zones du bassin et du thorax et contre les jambes.

28. Siège selon la revendication 1 ou 25, caractérisé en ce qu'à chaque tige articulée (7, 8) est associé au moins un élément limiteur de force (50).
